# EUROPEAN PATENT APPLICATION

(11) **EP 3 869 314 A1**
(43) Date of publication of application: **25.08.2021**
(21) Application number: 19893961.3
(22) Date of filing: 03.04.2019
(51) Int. Cl.: G06F 3/06

(54) **CONTROL DEVICE SWITCHING METHOD, CONTROL DEVICE AND STORAGE SYSTEM**

(30) Priority: 07.12.2018 CN 201811495738; 19.12.2018 CN 201811553216
(71) Applicant: Huawei Technologies Co., Ltd., Longgang District Shenzhen, Guangdong 518129 (CN)
(72) Inventor: LIU, Zunyi, Shenzhen, Guangdong 518129 (CN)
(74) Representative: Pfenning, Meinig & Partner mbB
(86) International application number: PCT/CN2019/081220
(87) International publication number: WO 2020/113875

(57) **Abstract**

This application provides a control device switching method, where the method is applied to a first control device, the first control device is connected to a second control device, and accesses, by using the second control device, a storage device that can be accessed by the second control device, and the first control device and the second control device are separately connected to a host. The method includes: obtaining configuration information of a LUN in the second control device; mapping a first path to the host based on the configuration information of the LUN, where the first path is a path for the host to access the LUN by using the first control device; and notifying the second control device to set a second path to be faulty, and switching a path for the host to access the LUN from the second path to the first path, where the second path is a path for the host to access the LUN by using the second control device. According to the technical solution provided in this application, performance of a storage system is not lowered during control device switching, and a control device may be replaced when a connection structure of a controller in the control device changes.

## Description

### TECHNICAL FIELD

This application relates to the storage field, and more specifically, to a control device switching method, a control device, and a storage system.

### BACKGROUND

Generally, a storage system may include a control device and a storage device. The control device is a core component of the storage system, and is responsible for processing an input/output (input output, IO) request delivered by a host and processing a storage service.

The control device in the storage system determines a computing capability of enterprise storage. After the storage system is used for some years, as a service volume of an enterprise increases, a computing capability of the control device has a bottleneck, and cannot meet a requirement of a customer. Therefore, the customer wants to replace the control device to improve storage performance.

In the prior art, in a process of replacing a control device, a service on a to-be-replaced controller needs to be switched to another controller, and the to-be-replaced controller is removed and is replaced with a new controller. In the prior art, when a controller is replaced in the foregoing manner, storage performance of a storage system is lowered by half, and reliability of the storage system is reduced. In addition, the foregoing manner cannot support replacement of a control device with a single controller.

### SUMMARY

This application provides a control device switching method, so that performance of a storage system cannot be reduced during control device switching, and a control device may be replaced when a connection structure of a controller in the control device changes.

According to a first aspect, a control device switching method is provided. The control device switching method is applied to a first control device. The first control device is connected to a second control device, and accesses, by using the second control device, a storage device that can be accessed by the second control device, and the first control device and the second control device are separately connected to a host. The method includes: obtaining configuration information of a logical unit number LUN in the second control device, where the LUN is created in the storage device; mapping a first path to the host based on the configuration information of the LUN, where the first path is a path for the host to access the LUN by using the first control device, and the first path passes through the second control device; and notifying the second control device to set a second path to be faulty, and switching a path for the host to access the LUN from the second path to the first path, where the second path is a path for the host to access the LUN by using the second control device.

It should be understood that the storage device may be a disk array RAID constructed by using disks.

The first control device may be a single-controller architecture that includes only one controller, or may be a multi-controller architecture that includes a plurality of controllers. This is not specifically limited in this application.

In this embodiment of this application, related storage configuration information obtained from a controller 121 and a controller 122 may include but is not limited to: configuration information related to the LUN and configuration information of some value-added services.

The configuration information related to the LUN may include but is not limited to: an identification (identification, ID) of the LUN, a capacity of the LUN, an attribute of the LUN, a controller to which the LUN belongs, a storage pool (pool) to which the LUN belongs, mapping (mapping) between the LUN and the host (host), and the like.

The storage configuration information of some value-added services may include but is not limited to: a snapshot (snapshot), replication (replication), and the like.

In the foregoing technical solution, in a process of switching the first control device to the second control device, the controller of the first control device does not need to be removed for replacement. Therefore, performance of the storage system is not lowered. In addition, during switching, because the controller does not need to be removed and inserted, the first control device is not affected by a change in a connection structure of a controller in the second control device.

In a possible implementation, the method further includes: after mapping the first path to the host, obtaining data of the LUN in the second control device; and receiving an input/output IO request for accessing the data of the LUN, and accessing the data of the LUN by using the first control device.

In this application, there are a plurality of implementations of obtaining the data of the LUN in the second control device. Data in a memory of the second control device may be stored in the storage device, and then the data of the LUN is obtained from the storage device. Alternatively, the data of the LUN in the memory of the second storage device is migrated to a memory of the first control device.

In the foregoing technical solution, after the controller in the first control device obtains complete data of each LUN, the first control device may take over a host service, to connect the first control device in service.

In another possible implementation, the method further includes: notifying the second control device to store the data in the memory of the second control device in the storage device; and obtaining the data of the LUN from the storage device.

It should be understood that complete data of all LUNs in the second control device may include: data in a memory (cache) and data stored in the storage device. Because the first control device may alternatively access the data stored in the storage device, the first control device may obtain, based on the ID of the LUN, the data of the LUN from a storage pool (pool) that is formed by a hard disk and that is in the storage device.

In another possible implementation, the method further includes: notifying the second control device to migrate the data of the LUN in the memory of the second storage device to the memory of the first control device.

It should be understood that, in addition to storing newly received IO data in a local memory and the memory, the second control device synchronizes the newly received IO data to the memory of the first control device in real time, until the data of the LUN in all memories in the second control device is migrated to the memory of the first control device.

In another possible implementation, the method further includes: after notifying the second control device to set the second path to be faulty, switching the path for the host to access the LUN from the second path to the first path.

In another possible implementation, the first path includes at least one path, and the method further includes: setting one path in the first path as a primary path, where the host accesses the LUN by using the primary path.

When the foregoing technical solution is applied to an active/passive (A/P) scenario, the first control device may take over a service of the second control device in service.

In another possible implementation, the method further includes: in a process of performing the obtaining data of the LUN in the second control device, receiving a mirror write request sent by the second controller, where the mirror write request is generated by the second controller when the second controller receives a write request, and the mirror write request is used to mirror-write data in the write request into the memory of the first control device.

In the A/P scenario, in a process of obtaining the data of the LUN, if the second control device receives the write request, the second control device mirrors the write request to the first control device, and therefore, can ensure consistency of data between the first control device and the second control device.

In another possible implementation, namely in an active/active (A/A) scenario, the method further includes: after switching the path for the host to access the LUN from the second path to the first path, notifying the second control device to set the second path to be faulty.

In another possible implementation, the method further includes: setting one controller in the first control device as a cluster primary controller; and allocating, by using the cluster primary controller, an address space allocated to a controller of the second control device to the controller of the first control device. Therefore, because the address space of the controller of the second control device is allocated to the controller of the first control device, when the IO request is received, the IO request is delivered to the controller of the first control device, to hand over the service of the second control device to the first control device.

In another possible implementation, the method further includes: obtaining configuration information of a snapshot and/or remote replication of the second control device; and implementing a snapshot and/or remote replication service in the first control device based on the configuration information of the snapshot and/or remote replication.

In the foregoing technical solution, the snapshot and/or the remote replication service may be implemented on the first control device, to implement remote data backup and reduce a loss caused by a data loss.

According to a second aspect, a control device switching method is provided. The control device switching method is applied to a first control device. The first control device is connected to a second control device, and the first control device and the second control device are separately connected to a storage device through two uplink cascade interfaces of the storage device, and are separately connected to a host. The method includes: obtaining configuration information of a logical unit number LUN in the second control device, where the LUN is created in the storage device; mapping a first path to the host based on the configuration information of the LUN, where the first path is a path for the host to access the LUN through a cascade interface through which the first control device is connected to the storage device; and notifying the second control device to set a second path to be faulty, and switching a path for the host to access the LUN from the second path to the first path, where the second path is a path for the host to access the LUN by using the second control device.

In a possible implementation, the method further includes: after mapping the first path to the host, obtaining data of the LUN in the second control device; and receiving an IO request for accessing the data of the LUN, and accessing the data of the LUN by using the first control device.

In another possible implementation, the method further includes: notifying the second control device to store data in a memory of the second control device in the storage device; and obtaining the data of the LUN from the storage device.

In another possible implementation, the method further includes: notifying the second control device to migrate the data of the LUN in the memory of the second storage device to a memory of the first control device.

In another possible implementation, the first path includes at least one path, and the method further includes: setting one path in the first path as a primary path, where the host accesses the LUN by using the primary path.

In another possible implementation, the method further includes: in a process of performing the obtaining data of the LUN in the second control device, receiving a mirror write request sent by the second controller, where the mirror write request is generated by the second controller when the second controller receives the IO request, and the mirror write request is used to mirror-write data in the IO request into the memory of the first control device.

In another possible implementation, the method further includes: obtaining configuration information of a snapshot and/or remote replication of the second control device; and implementing a snapshot and/or remote replication service in the first control device based on the configuration information of the snapshot and/or remote replication.

According to a third aspect, a first control device is provided. The first control device is connected to a second control device, and accesses, by using the second control device, a storage device that can be accessed by the second control device, and the first control device and the second control device are separately connected to a host. The first control device includes an obtaining module, a mapping module, a processing module, and a receiving module. Functions executed by the obtaining module, the mapping module, the processing module, and the receiving module are the same as functions implemented by the steps in the method provided in the first aspect. Specifically, refer to descriptions of the steps of the method in the first aspect, and details are not described herein again.

According to a fourth aspect, a first control device is provided. The first control device is connected to a second control device, and the first control device and the second control device are separately connected to a storage device through two uplink cascade interfaces of the storage device, and are separately connected to a host. The first control device includes an obtaining module, a mapping module, a processing module, and a receiving module. Functions executed by the obtaining module, the mapping module, the processing module, and the receiving module are the same as functions implemented by the steps in the method provided in the second aspect. Specifically, refer to descriptions of the steps of the method in the second aspect, and details are not described herein again.

According to a fifth aspect, a first control device is provided. The first control device is connected to a second control device, and accesses, by using the second control device, a storage device that can be accessed by the second control device, and the first control device and the second control device are separately connected to a host. The first control device includes a processor, a memory, a communications interface, and a bus. The processor, the memory, and the communications interface are connected to and communicate with each other by using the bus, the memory is configured to store a computer-executable instruction, and when the first control device runs, the processor executes the computer-executable instruction in the memory to execute, by using the first control device, the operation steps of the method according to any one of the first aspect or the possible implementations of the first aspect.

According to a sixth aspect, this application provides a first control device. The first control device is connected to a second control device, and the first control device and the second control device are separately connected to a storage device through two uplink cascade interfaces of the storage device, and are separately connected to a host. The first control device includes a processor, a memory, a communications interface, and a bus. The processor, the memory, and the communications interface are connected to and communicate with each other by using the bus, the memory is configured to store a computer-executable instruction, and when the first control device runs, the processor executes the computer-executable instruction in the memory to execute, by using the control device, the operation steps of the method according to any one of the second aspect or the possible implementations of the second aspect.

According to a seventh aspect, a storage system is provided. The storage system includes a first control device and a second control device, where the second control device is connected to a storage device, the first control device is connected to an interface of the second control device, the first storage device accesses the storage device through the interface, and the first control device and the second control device are separately connected to a host.

According to an eighth aspect, a storage system is provided. The storage system includes a first control device and a second control device, where the first control device is connected to the second control device, and the first control device and the second control device are separately connected to a storage device through two uplink cascade interfaces of the storage device, and are separately connected to a host.

According to a ninth aspect, a computer program product is provided. The computer program product includes computer program code. When the computer program code is run on a computer, the computer is enabled to perform the methods in the foregoing aspects.

According to a tenth aspect, a computer-readable medium is provided. The computer-readable medium stores program code. When the computer program code is run on a computer, the computer is enabled to perform the methods in the foregoing aspects.

In this application, the implementations provided in the foregoing aspects can be further combined to provide more implementations.

### BRIEF DESCRIPTION OF DRAWINGS

FIG. 1 is a schematic diagram of an architecture of a storage system with disk and controller integration;
FIG. 2 is a schematic diagram of an architecture of a storage system in which a control device is separated from a storage device;
FIG. 3 is a schematic diagram of a connection between the storage system shown in FIG. 1 and a host and a connection relationship between a control device and a storage device;
FIG. 4 is a schematic diagram of a connection relationship for connecting a new control device to a storage system according to an embodiment of this application;
FIG. 5 is a schematic diagram of a structure of a connection between a control device and a control device that is in a storage system according to an embodiment of this application;
FIG. 6 is a schematic block diagram of an AP storage architecture according to an embodiment of this application;
FIG. 7 is a schematic flowchart of switching, in an AP storage architecture, a host service of a control device in a storage system to a control device according to an embodiment of this application;
FIG. 8 is a schematic block diagram of an AA storage architecture according to an embodiment of this application;
FIG. 9 is a schematic flowchart of switching, in an AA storage architecture, a host service to a control device according to an embodiment of this application;
FIG. 10 is a schematic diagram of a connection between the storage system shown in FIG. 2 and a host and a connection relationship between a control device and a storage device;
FIG. 11A and FIG. 11B are a schematic diagram of a connection relationship for connecting a new control device to a storage system according to an embodiment of this application;
FIG. 12 is a schematic block diagram of a first control device according to an embodiment of this application;
FIG. 13 is a schematic block diagram of a first control device according to an embodiment of this application;
FIG. 14 is a schematic diagram of a structure of a first control device according to an embodiment of this application; and
FIG. 15 is a schematic diagram of a structure of a first control device according to an embodiment of this application.

### DESCRIPTION OF EMBODIMENTS

The following describes technical solutions of this application with reference to accompanying drawings.

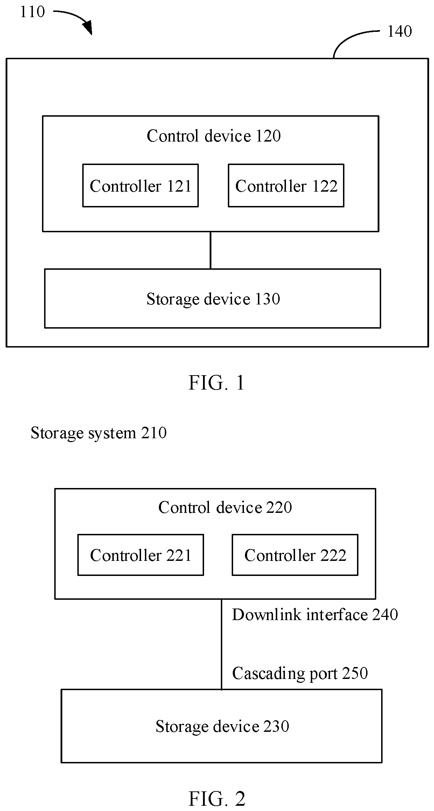

Generally, a storage system may include a control device and a storage device. The control device is responsible for processing an input/output (input output, IO) request delivered by a host and processing a storage service. The storage device may be a disk array (redundant arrays of independent drives, RAID) constructed by using disks. The control device and the storage device can be in a same subrack, which is generally referred to as disk and controller integration. Alternatively, the control device and the storage device may not be in a same subrack, in other words, the control device is separated from the storage device. The following describes in detail an architecture of the storage system with reference to FIG. 1 and FIG. 2.

FIG. 1 is a schematic diagram of an architecture of a storage system 110 with disk and controller integration. As shown in FIG. 1, a control device 120 and a storage device 130 included in the storage system 110 are installed on a subrack 140, and are connected to each other by using an interface on the subrack 140. When the control device 120 or the storage device 130 needs to be replaced, a controller in the control device 120 or a hard disk in the storage device 130 needs to be removed from the subrack 140.

The control device 120 may be a single-controller architecture that includes only one controller, or may be a multi-controller architecture that includes a plurality of controllers. For example, the control device 120 in FIG. 1 is a two-controller architecture. For example, the control device 120 may include a controller 121 and a controller 122. The storage device 130 may be, for example, a RAID that includes a plurality of hard disks.

FIG. 2 is a schematic diagram of an architecture of a storage system 210 in which a control device is separated from a storage device. As shown in FIG. 2, a control device 220 is separated from a storage device 230, and a downlink interface 240 of the control device 220 is connected to a cascade interface 250 of the storage device 230 by using a cable. When the control device 220 or the storage device 230 needs to be replaced, the downlink interface 240 of the control device 220 is disconnected from the cascade interface 250 of the storage device 230, to replace the control device 220 or the storage device 230 as a whole.

The control device 220 may be a single-controller architecture that includes only one controller, or may be a multi-controller architecture that includes a plurality of controllers. For example, the control device 220 in FIG. 2 is a two-controller architecture. For example, the control device 220 may include a controller 221 and a controller 222.

The storage device 230 in FIG. 2 may be a RAID that includes a plurality of hard disks.

A control device in a storage system determines a computing capability of enterprise storage. After the storage system has a specific age, as a service volume of an enterprise increases, a computing capability of the control device has a bottleneck, and cannot meet a requirement of a customer. Therefore, the customer has a requirement of replacing the control device to improve storage performance.

The following uses the storage system 110 with disk and controller integration, as shown in FIG. 1, as an example to analyze in detail a process of replacing a control device of a storage system in the prior art.

Referring to FIG. 1, in the process of replacing the control device of the storage system in the prior art, an old controller in the control device may be sequentially replaced with a new controller. Specifically, a service of the controller 121 shown in FIG. 1 may be first switched to the controller 122. Second, the controller 121 may be removed from the subrack 140, a new controller is inserted into the subrack 140 to replace the controller 121, and then the service that is switched to the controller 122 is switched back to the new controller after replacement. The controller 122 is replaced. When the controller 122 is replaced, a service of the controller 122 is switched to the new controller that replaces the controller 121, the controller 122 is removed from the subrack 140, a new controller for replacing the controller 122 is inserted into the subrack 140, and then the service is switched back to the new controller that replaces the controller 122, thereby completing replacement of the controllers in the control device 120. In the prior art, when a controller is replaced in the foregoing manner, a service on a to-be-replaced controller needs to be switched to another controller. As a result, this lowers storage performance of a storage system and reliability of the storage system. In addition, the foregoing manner cannot support replacement of a control device with a single controller.

In addition, in the prior art, when a controller is replaced in the foregoing replacement manner, a structure of a new controller needs to be the same as that of an old controller, to ensure that the new controller can be inserted into the subrack 140. However, generally, when the old controller is upgraded to the new controller, the structure of the new controller changes. For example, a pin of the new controller changes due to an increase in function. In this way, the new controller cannot be inserted into the subrack 140, and the old controller cannot be replaced in the foregoing replacement manner.

An embodiment of this application provides a control device switching method. In a switching process, performance of a storage system is not lowered, and a controller in a control device does not need to be replaced. Therefore, even if a structure of a new controller changes, the new controller can be used in the storage system.

The following describes in detail, by using the storage system 110 with disk and controller integration, as shown in FIG. 1, as an example, the control device switching method provided in this embodiment of this application.

It should be noted that the control device switching method provided in this embodiment of this application may be applicable to a single-controller architecture that includes only one controller, and may also be applicable to a multi-controller architecture that includes a plurality of controllers. The following describes in detail the technical solutions provided in this application by using an example in which a control device includes two controllers.

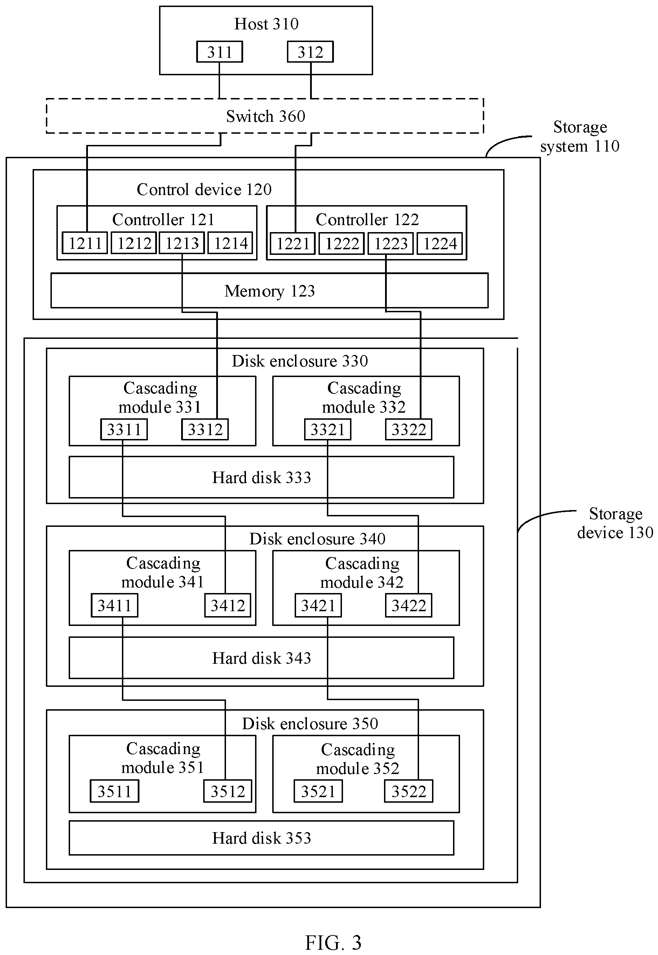

FIG. 3 is a schematic diagram of a connection between the storage system 110 shown in FIG. 1 and a host 310 and a connection relationship between the control device 120 and the storage device 130. As shown in FIG. 3, in this embodiment of the present invention, the storage device 130 includes a disk enclosure 330, a disk enclosure 340, and a disk enclosure 350 that are cascaded to the control device 120.

The host 310 may include a service port 311 and a service port 312.

The control device 120 includes a controller 121, a controller 122, and a memory 123. The controller 121 includes a front-end interface 1211, a front-end interface 1212, a cascade interface 1213, and a cascade interface 1214. The controller 122 includes a front-end interface 1221, a front-end interface 1222, a cascade interface 1223, and a cascade interface 1224.

The storage device 130 includes the disk enclosure 330, the disk enclosure 340, and the disk enclosure 350.

The disk enclosure 330 may include a cascading module 331, a cascading module 332, and a hard disk 333. The cascading module 331 may include a cascade interface 3311 and a cascade interface 3312.

Referring to FIG. 3, the front-end interface 1211 in the controller 121 and the front-end interface 1221 in the controller 122 are separately connected to the service port 311 and the service port 312 in the host 310. The host 310 may send an IO request to the controller 121 and/or the controller 122 for processing by using the service port 311 and/or the service port 312.

A connection mode between a controller and a host is not specifically limited in this embodiment of this application. In an example, the front-end interface 1211 in the controller 121 and the front-end interface 1221 in the controller 122 may be directly and separately connected to the service port 311 and the service port 312 in the host 310. In another example, FIG. 3 may further include a switch 360. The front-end interface 1211 in the controller 121 and the front-end interface 1221 in the controller 122 may be separately connected to the service port 311 and the service port 312 by using the switch 360.

One controller may have two cascade interfaces (which may also be referred to as expansion (expand, EXP) ports), and the controller may access data in the storage device 130 by using either of the two cascade interfaces.

For example, the cascade interface 1213 in the controller 121 may be connected to the cascade interface 3312 in the cascading module 331 in the disk enclosure 330, and the cascade interface 3311 in the cascading module 331 is connected to a cascade interface 3412 in a cascading module 341 in the disk enclosure 340, and a cascade interface 3411 in the cascading module 341 is connected to a cascade interface 3512 in a cascading module 351 in the disk enclosure 350. When another disk enclosure needs to be cascaded, a cascade interface 3511 in the disk enclosure 350 may be used for connection. In the foregoing cascading manner, the controller 121 may access data stored in the hard disk 333, a hard disk 343, and a hard disk 353. Similarly, the controller 122 may also be connected to a cascade interface 3322 of the cascading module 332 of the disk enclosure 330 through the cascade interface 1223, a cascade interface 3321 of the cascading module 332 is connected to a cascade interface 3422 of the cascading module 342 of the disk enclosure 340, and a cascade interface 3421 of the cascading module 342 is connected to a cascade interface 3522 of a cascading module 352 of the disk enclosure 350. Therefore, the controller 122 may also access the data stored in the hard disk 333, the hard disk 343, and the hard disk 353.

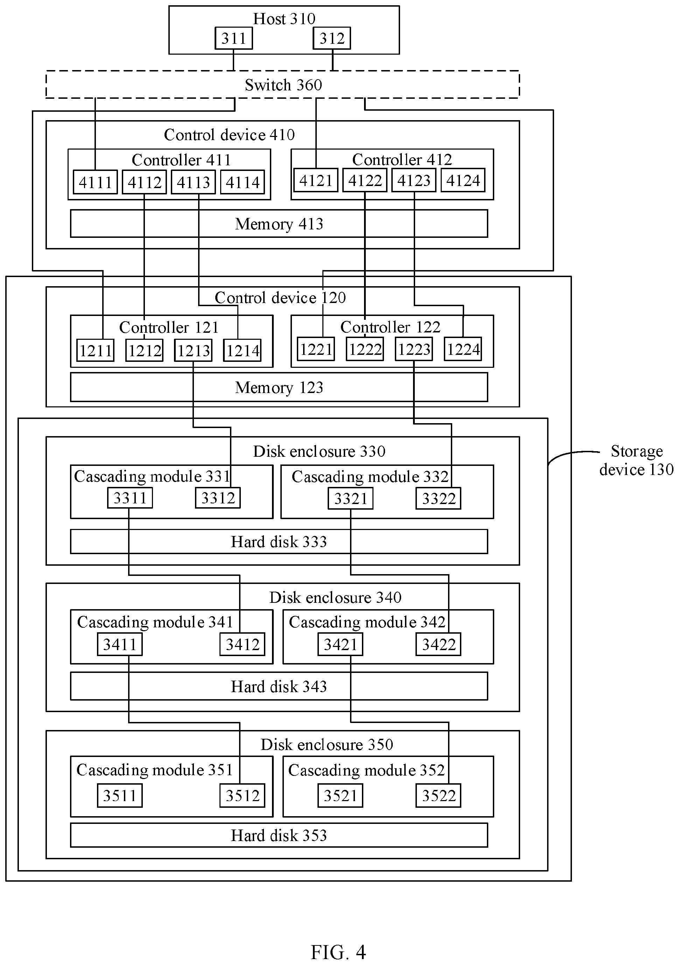

According to the method for switching a control device in a storage system, provided in this embodiment of this application, a new control device may be connected to the storage system in service, and the control device in the storage system is switched from an old control device to the new control device. After a new control device 410 is connected to the storage system 110, for a connection between the new control device 410 and the storage system 110, refer to descriptions in FIG. 4.

The control device 410 includes a controller 411, a controller 412, and a memory 413. The controller 411 includes a front-end interface 4111, a front-end interface 4112, a cascade interface 4113, and a cascade interface 4114. The controller 412 includes a front-end interface 4121, a front-end interface 4122, a cascade interface 4123, and a cascade interface 4124.

Refer to FIG. 4. The front-end interface 4111 in the controller 411 and the front-end interface 4121 in the controller 412 may be separately connected to the service port 311 and the service port 312 in the host 310.

A connection mode between the controller 411 and the host 310 and a connection mode between the controller 412 and the host 310 are not specifically limited in this embodiment of this application. In an example, the front-end interface 4111 in the controller 411 and the front-end interface 4121 in the controller 412 may be directly and separately connected to the service port 311 and the service port 312 in the host 310. In another example, the front-end interface 4111 and the front-end interface 4121 may be separately connected to the service port 311 and the service port 312 by using the switch 360.

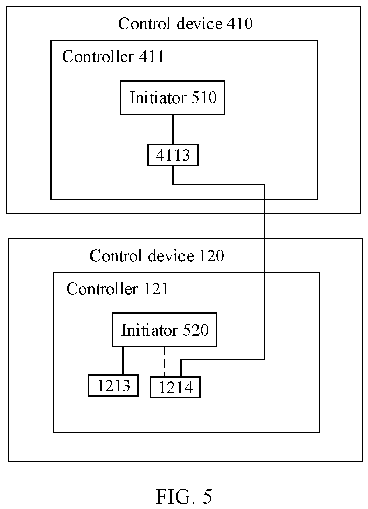

In FIG. 4, the cascade interface 4113 in the control device 410 may be connected to the cascade interface 1214 in the control device 120. Therefore, the control device 410 can access, in this connection mode, the data stored in the storage device 130 (the hard disk 333, the hard disk 343, and the hard disk 353). In this embodiment of the present invention, the control device 410 may also access the memory 123 of the control device 120. For specific internal implementation of connecting the cascade interface 4113 in the control device 410 to the cascade interface 1214 in the control device 120, refer to descriptions in FIG. 5.

FIG. 5 is a schematic diagram of a structure of a connection between the control device 410 and the control device 120 that is in the storage system 110 according to an embodiment of this application.

It should be understood that, in FIG. 5, an example in which the cascade interface 4113 of the controller 411 in the control device 410 is connected to the cascade interface 1214 of the controller 121 in the control device 120 is used for description.

There is an initiator chip in each controller, and the initiator chip is connected to a cascade interface in the controller. System software in the controller may access, by using the initiator chip and the cascade interface, data stored in a storage device.

Refer to FIG. 5. An initiator 520 is disposed inside the controller 121, and the initiator 520 is connected to the cascade interface 1213 and the cascade interface 1214. System software in the controller 121 may access, by using the initiator 520 and the cascade interface 1213, or the initiator 520 and the cascade interface 1214, data stored in the storage device 130 (namely, the memory 123, the hard disk 333, the hard disk 343, and the hard disk 353).

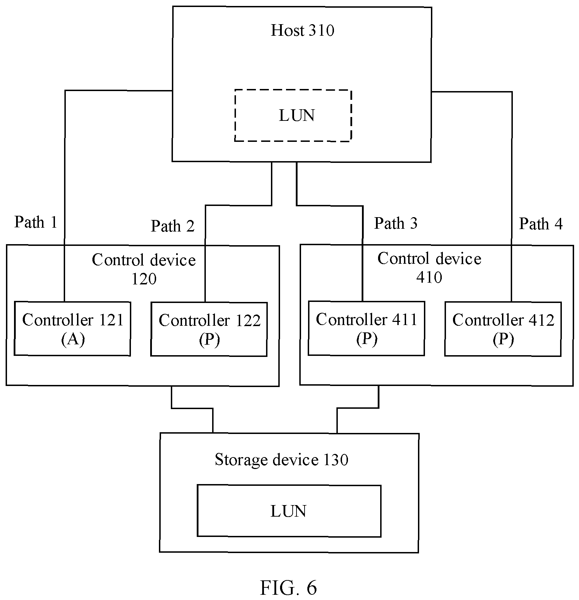

To switch the control device 120 to the control device 410, to enable the control device 410 to access the data stored in the storage device 130, in this embodiment of this application, the initiator 520 may be disconnected from the cascade interface 1214 (as shown by a dashed line in FIG. 6), and the cascade interface 1214 may be connected to the cascade interface 4113 in the controller 411. After the foregoing connection, an initiator 510 in the controller 411 may be connected to the cascade interface 1214 in the controller 121 through the cascade interface 413. Therefore, the controller 411 may access, through the cascade interface 1214, the data stored in the storage device 130.

Specifically, pins between the initiator 520 and the cascade interface 1214 may be disconnected. For example, a pin parameter for connecting the initiator 520 in firmware to the cascade interface 1214 may be set to be disabled (disable).

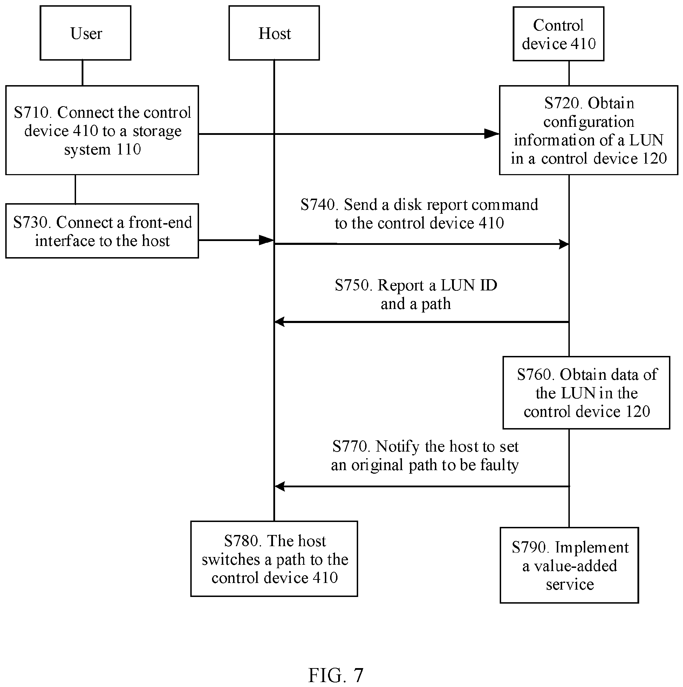

In this embodiment of this application, in FIG. 4, after the control device 410 is connected to the storage system 110 in service, the control device 410 may be started, and a host service of the control device 120 in the storage system 110 may be switched to the control device 410. For a method for switching the host service in the control device 120 to the control device 410, refer to descriptions in FIG. 6 and FIG. 7.

Generally, a multi-controller storage system may include an active/passive (active passive, AP) architecture and an active-active (active active, AA) architecture.

In the AP storage architecture, one of a plurality of controllers is a home controller (active controller), and the other controllers are secondary controllers (passive controllers). A logical unit number (logical unit number, LUN) of a storage device belongs to the active controller, and all I/O read/write requests of a host are processed by the active controller. Data in the active controller can be mirrored to the passive controllers in real time. When the active controller is faulty, the LUN can be switched to the passive controller, and the passive controller can continue to provide a service for the host by accessing the LUN.

In the AA storage architecture, the LUN does not belong to any controller. The plurality of controllers are all active controllers and can process an I/O request of a same LUN. In the AA storage architecture, a cluster primary controller can segment an address space of the LUN into grains (grain) of a specific size, and can alternately allocate segmented address spaces of the LUN to the plurality of controllers. A host delivers an IO request to a controller end, and a controller that receives the IO request may determine, based on a logical address carried in the IO request and the address space that is of the LUN and that is allocated to each active controller, an active controller that processes the IO request. In this way, a storage system can automatically implement load balancing without participation of host-end load balancing software. Therefore, performance of all controllers can be maximized.

The following uses the AP storage architecture as an example to describe in detail, with reference to FIG. 6 and FIG. 7, a specific implementation process of connecting the control device 410 to the storage system 110 in service and switching a control device in the storage system 110 from the old control device 120 to the new control device 410 in this embodiment of this application.

It should be noted that examples in FIG. 6 and FIG. 7 are merely intended to help a person skilled in the art understand this embodiment of this application, but are not intended to limit this embodiment of this application to a specific value or a specific scenario shown in the examples. A person skilled in the art apparently can make various equivalent modifications or changes according to the examples in FIG. 6 and FIG. 7, and such modifications or changes also fall within the scope of the embodiments of this application.

FIG. 6 is a schematic block diagram of an AP storage architecture according to an embodiment of this application. In the AP storage architecture shown in FIG. 6, when the control device in the storage system 110 is the control device 120, the host accesses the LUN by using a path 1 of the controller 121 or a path 2 of the controller 122. After the control device 410 is connected to the storage system 110 in service, the host may alternatively access the LUN by using a path 3 of the controller 411 or a path 4 of the controller 412.

It should be understood that in FIG. 6, the path 1 corresponds to a path between the front-end interface 1211 in the controller 121 and the host 310 in FIG. 4, the path 2 corresponds to a path between the front-end interface 1221 in the controller 121 and the host 310, the path 3 corresponds to a path between the front-end interface 4111 in the controller 411 and the host 310, and the path 4 corresponds to a path between the front-end interface 4121 in the controller 412 and the host 310.

In the AP storage architecture, the LUN belongs to a primary controller. For example, the controller 121 is a home controller (active controller) of the LUN. The controller 122, the controller 411, and the controller 412 are all passive controllers. Therefore, the path 1 is an active path, the LUN belongs to the controller 121, and all read/write IO requests of the host are processed by the controller 121. The path 2, the path 3, and the path 4 are passive paths. When the home controller 121 is faulty, the LUN may be switched to a passive controller to continue to provide a service.

With reference to FIG. 7, the following describes in detail a possible implementation process of switching, in the AP storage architecture shown in FIG. 6, a control device in the storage system 110 from the old control device 120 to the new control device 410.

FIG. 7 is a schematic flowchart of switching, in the AP storage architecture, a host service of the control device 120 in the storage system 110 to the control device 410 according to an embodiment of this application. A method shown in FIG. 7 includes steps 710 to 790. The following separately describes in detail the steps 710 to 790.

Step 710: A user connects the control device 410 to the storage system 110 in service.

In this embodiment of this application, the cascade interface 4113 of the control device 410 may be connected to the cascade interface 1214 in the control device 120, so that the control device 410 can access the data stored in the storage device 130 (the hard disk 333, the hard disk 343, and the hard disk 353) and data stored in the memory 123 of the control device 120. For a specific connection relationship, refer to the foregoing descriptions in FIG. 4 and FIG. 5. Details are not described herein again.

After the control device 410 is connected to the storage system 110 in service and the control device 410 is started, the user sets one controller in the control device 410 as a primary controller, to perform a management function in the control device 410.

For ease of description, the controller 411 in the control device 410 is used as the primary controller for description in the following.

Step 720: The control device 410 obtains configuration information of a LUN in the control device 120.

After the user connects the control device 410 to the storage system 110 in service, a controller in the control device 410 may obtain related configuration data of the LUN stored in the control device 120.

After the control device 410 is started, the controller 411 is used as the primary controller, and may read the configuration information of the LUN in the control device 120. After the LUN is created on the storage device 130, the LUN is configured, to be specific, an ID of the LUN is generated, and a host to which the LUN is mounted is configured for the LUN. In other words, a mapping relationship between the ID of the LUN and an HBA card of the host is established.

The configuration information related to the LUN may include but is not limited to: an identification (identification, ID) of the LUN, a capacity of the LUN, an attribute of the LUN, a controller to which the LUN belongs, a storage pool (pool) to which the LUN belongs, mapping (mapping) between the LUN and the host (host), and configuration information of some value-added services related to the LUN, for example, a snapshot (snapshot) and replication (replication).

It should be understood that the controller 411 in the control device 410 reads the configuration information of the LUN from the control device 120 and stores the configuration information in a memory of the control device 410.

Step 730: Connect a front-end port of the control device 410 to the host.

In this embodiment of this application, the user may connect front-end ports of the controller 411 and the controller 412 that are in the control device 410 to the host 310. For a specific related connection relationship, refer to the foregoing descriptions in FIG. 4 and FIG. 5. Details are not described herein again.

Step 740: The host sends a disk report command to the control device 410.

Specifically, after the control device 410 is connected to the storage system 110, after receiving an IO request delivered by the host 310, the active controller (for example, the controller 121) in the control device 120 adds a unit attention (unit attention, UA) flag to an IO request feedback message returned to the host 310. After receiving the feedback message, the host 310 sends the disk report command to the control device 410.

Step 750: The control device 410 reports the ID and a path of the LUN.

After receiving the disk report command, the controller 411 and the controller 412 obtain the ID of the LUN from the configuration information of the LUN, and the ID of the LUN is respectively reported to the host by using the controller 411 and the controller 412. In a process of reporting the ID of the LUN, a path for reporting the LUN is recorded, and then the path for reporting the LUN is mapped to the host. It can be learned from the foregoing steps that the configuration information stored in the control device 410 is obtained from the control device 120, and is consistent with the configuration information in the control device 120. Therefore, after receiving the ID of the LUN, which is reported by the controller 411 and the controller 412, the host determines that the ID of the LUN is the same as the ID of the LUN belonging to the controller 121, and the ID of the LUN is reported by the controller 411 and the controller 412. Therefore, paths between the host and the controller 411 and between the host and the controller 422 are used as two new paths for accessing the LUN, namely, the path 3 and the path 4 shown in FIG. 6, and the path 3 and the path 4 are used as two passive paths for the host to access the LUN.

Step 760: The control device 410 obtains data of the LUN in the control device 120.

In this embodiment of this application, the controller 411 in the control device 410 is used as a primary controller, and may obtain complete data of each LUN in the controller 121 and the controller 122 in the control device 120. After obtaining the complete data of each LUN in the controller 121 and the controller 122, the controller 411 may mirror the complete data of the LUN to the controller 412.

After the controller 411 and the controller 412 obtain the complete data of each LUN, the controller 411 or the controller 412 in the control device 410 may take over a host service.

It should be understood that the complete data of the LUN may include data in a memory (cache) and the data stored in the storage device 130 (namely, the memory 123, the hard disk 333, the hard disk 343, and the hard disk 353). Because the control device 410 may also access the data stored in the storage device 130 in the storage system 110, the control device 410 may also obtain, based on the ID of the LUN, the data of the LUN from a storage pool (pool) that is formed by a hard disk and that is in the storage device 130.

However, the control device 410 may obtain, in the following two implementations, the data that is of the LUN and that is stored in the memories of the controller 121 and the controller 122.

In a first implementation, the controller 411 notifies the controller 121 and the controller 122 to directly store the data in the memories into a pool. After all the data in the memories is stored in the pool, the controller 411 and the controller 412 in the control device 410 may obtain the data of the LUN by accessing the pool.

In a second implementation, the data in the memories of the controller 121 and the controller 122 may be migrated to a memory of the controller 411 of the control device 410. In a process of obtaining the data of the LUN in the control device 120, if the controller 410 receives IO data, in addition to storing the IO data in a local memory and the memory in the controller 122, the controller 410 also synchronizes the IO data to the memory of the controller 411 in real time until the data of the LUN in all the memories of the controller 121 and the controller 122 is migrated to the memory of the controller 411. The controller 411 may mirror the obtained data of the LUN to the memory of the controller 412.

It should be noted that there may be a plurality of implementations in which the controller 411 communicates with the controller 121 and the controller 122 to obtain the data of the LUN. For example, referring to FIG. 4, the front-end interface 4111, the front-end port 1211, and the front-end port 1221 are separately connected to the host by using the switch 360. The controller 411 may communicate with the controller 121 through a connection between the front-end interface 4111 and the front-end port 1211 in the controller 121, and forwarding performed by the switch 360. As the primary controller, the controller 411 may further notify the controller 412 to communicate with the controller 122 through a connection between the front-end interface 4121 and the front-end port 1221 in the controller 122, and forwarding performed by the switch 360. For another example, the controller 411 may further communicate with the controller 121 through a connection between the front-end port 4112 and the front-end port 1211 in the controller 121. The controller 412 may further communicate with the controller 122 through a connection between the front-end port 4122 and the front-end port 1221 in the controller 122.

Step 770: The control device 410 notifies the control device 120 to set a path for accessing the LUN by using the controller 121 and the controller 122 to be faulty, for example, setting the path 1 and the path 2 in FIG. 6 to be faulty.

As the primary controller, the controller 411 in the control device 410 notifies a primary controller in the control device 120 to set a path for the host to access the LUN by using the controller 121 and the controller 122 to be faulty, for example, set the path 1 and the path 2 to be faulty.

Specifically, the primary controller in the control device 120 may delete a mapping relationship between the host and the LUN. After receiving an IO request delivered by the host, the active controller (for example, the controller 121) in the control device 120 may add a UA flag to an IO request feedback message returned to the host. After receiving the feedback message, the host may discover, based on UA scanning, that a path for the host to access the ID of the LUN is only the path 3 passing through the controller 411 and the path 4 passing through the controller 412.

After the controller 411 in the control device 410 notifies the control device 120 to set the path 1 and the path 2 in FIG. 6 to be faulty, the controller 411 sets a home controller of the LUN in the control device 410.

Specifically, the controller 411 modifies the configuration information that is of the LUN and that is obtained from the control device 120, to set the home controller of the LUN in the control device 410. For example, after the configuration information of the LUN is read from the controller 121 and the controller 122 in the control device 120, the controller to which the LUN belongs is the controller 121 in the control device 120, and the controller 411 changes the controller to which the LUN belongs in the configuration information of the LUN to a controller in the control device 410, for example, the controller 411.

Step 780: The host 310 switches a path to the control device 410.

Because the control device 120 deletes the mapping relationship between the host and the LUN, the host cannot scan the path 1 and the path 2, but can scan only the path 3 and the path 4. Therefore, the host 310 that can access the LUN by using only the path 3 and the path 4 can send the IO request to the controller 411 or the controller 412 by using the path 3 or the path 4. After receiving the IO request delivered by the host, the controller 411 or the controller 412 may add a return value to the IO request feedback message returned to the host. The return value may be used to indicate that a host path (the path 3) of the controller 411 in the control device 410 is active. After receiving the feedback message, when delivering an IO request next time, the host 310 may send the IO request to the controller 411 by using the active path 3.

For example, referring to FIG. 6, the controller 411 is an active controller, and the controller 412 is a passive controller. The LUN of the storage device belongs to the controller 411, and all I/O read/write requests of the host are processed by the controller 411. Data in the active controller 411 can be mirrored to the passive controller 412 in real time. When the active controller 411 is faulty, the LUN can be switched to the passive controller 412, and the passive controller 412 can continue to provide a service for the host by accessing the LUN.

Optionally, in some embodiments, in this embodiment of this application, after host services of the controller 121 and the controller 122 in the control device 120 are switched to the controllers in the control device 410, in other words, after the control device 410 completely takes over the LUN in the control device 120, the control device 120 may not be removed. The control device 120 may be used as a storage device, and the memory 123 in the control device 120 may provide a storage access service for the controller 411 and the controller 412 in the control device 410.

In this embodiment of this application, the control device 120 may continue to be used as a storage device, and the data stored in the memory 123 of the control device 120 may not be migrated.

In this embodiment of this application, after the storage system 110 is connected to the control device 410, the control device 410 does not need to completely take over the host services, and the control device 120 and the control device 410 in the storage system 110 may separately bear some of the host services. In this way, a controller in the control device 120 can be reused, and a service life of the controller in the control device 120 can be prolonged.

Step 790: The controllers in the control device 410 implement a value-added service.

The controller 411 and the controller 412 in the control device 410 may obtain configuration information of the controllers in the control device 120 according to step 820, and may implement value-added services such as a snapshot and replication.

In this embodiment of this application, in a switching process, performance of a storage system is not lowered, and a controller in a control device does not need to be replaced. Therefore, even if a structure of a new controller changes, the new controller can be used in the storage system.

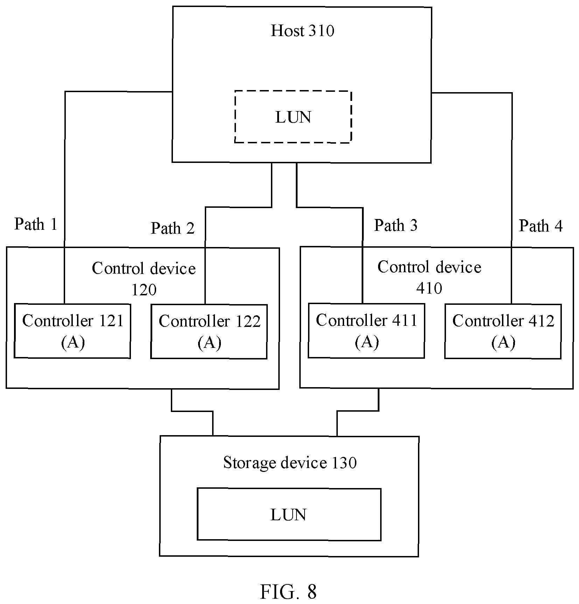

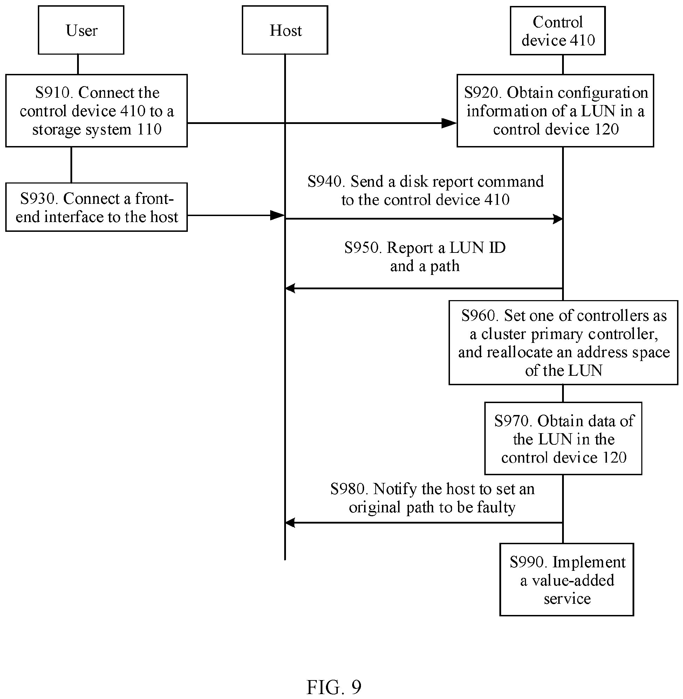

The following uses the AA storage architecture as an example to describe in detail, with reference to FIG. 8 and FIG. 9, a specific implementation process of connecting the control device 410 to the storage system 110 in service and switching a service of the control device 120 in the storage system 110 to the control device 410 in this embodiment of this application.

It should be noted that examples in FIG. 8 and FIG. 9 are provided merely for helping a person skilled in the art understand this embodiment of this application, but are not intended to limit this embodiment of this application to a specific value or a specific scenario shown in the examples. A person skilled in the art apparently can make various equivalent modifications or changes according to the examples shown in FIG. 8 and FIG. 9, and such modifications or changes also fall within the scope of the embodiments of this application.

FIG. 8 is a schematic block diagram of an AA storage architecture according to an embodiment of this application. In the AA storage architecture shown in FIG. 8, when the control device in the storage system 110 is the control device 120, the host accesses the LUN by using the path 1 of the controller 121 or the path 2 of the controller 122. After the control device 410 is connected to the storage system 110 in service, the host may alternatively access the LUN by using the path 3 of the controller 411 and the path 4 of the controller 412.

It should be understood that in FIG. 8, the path 1 corresponds to the path between the front-end interface 1211 in the controller 121 and the host 310 in FIG. 4, the path 2 corresponds to the path between the front-end interface 1221 in the controller 121 and the host 310, the path 3 corresponds to the path between the front-end interface 4111 in the controller 411 and the host 310, and the path 4 corresponds to the path between the front-end interface 4121 in the controller 412 and the host 310.

In the AA storage architecture, a LUN does not have a home controller. There is a cluster primary controller in a controller cluster including a plurality of controllers. The cluster primary controller segments the address space of the LUN into grains (grain) of a specific size, and evenly and alternately allocates the segmented grains to the plurality of controllers in the cluster.

Before the control device 410 is connected to the storage system 110 in service, a cluster primary controller in the control device 120 evenly and alternately allocates segmented grains to the controller 121 and the controller 122. In this way, an address space of an accessed LUN is allocated to each of the controller 121 and the controller 122. In this way, each controller has a home LUN address space. In an example, the host delivers an IO request to the controller 121, and the controller 121 may determine, based on a logical address carried in the IO request and home LUN address spaces that are allocated to the controller 121 and the controller 122, whether a controller that processes the IO request is the controller 121 or the controller 122. For example, if it is determined that the controller that processes the IO request is the controller 122, the controller 121 that receives the IO request may forward the IO request to the controller 122 for processing.

After the control device 410 is connected to the storage system 110 in service, the control device 410 and the control device 120 may form a multi-controller AA cluster, and the controller 121, the controller 122, the controller 411, and the controller 412 are all active controllers. In addition, the path 1, the path 2, the path 3, and the path 4 for the host to access the LUN are all active paths.

With reference to FIG. 9, the following describes in detail a possible implementation of switching the host service in the control device 120 to the newly connected control device 410 in the AA storage architecture shown in FIG. 8.

FIG. 9 is a schematic flowchart of switching, in an AA storage architecture, a host service to the control device 410 according to an embodiment of this application. A method shown in FIG. 9 may include steps 910 to 990. The following separately describes in detail the steps 910 to 990.

The steps 910 to 950 are the same as the steps 710 to 750 in FIG. 7, and details are not described herein again.

Step 960: Set one of the controller 411 or the controller 412 in the control device 410 as a cluster primary controller, and reallocate an address space of the LUN.

After the controller 411 and the controller 412 are connected to the storage system 110, cluster primary control is switched from the control device 120 in the storage system 110 to the control device 410. In addition, one of the controller 411 or the controller 412 in the control device 410 is set as the cluster primary controller, and the controller in the control device 410 provides a cluster management function for the controller 411, the controller 412, the controller 121, and the controller 122.

For ease of description, the following uses an example in which the controller 411 is the cluster primary controller for description. In addition, a correspondence between a controller in the control device 410 and a controller in the control device 120 is further set. For example, the controller 121 may be set to be corresponding to the controller 411, and the controller 122 may be set to be corresponding to the controller 412.

As the cluster primary controller, the controller 411 in the control device 410 provides the cluster management function, and may reallocate a grain segmentation algorithm of the LUN. The address space of the LUN is segmented into grains (grain) of a specific size, and the grains are evenly and alternately allocated to the controller 411 and the controller 412 in the control device 410.

After the control device 410 is connected to the storage system 110 in service, the control device 120 in the storage system 110 and the newly connected control device 410 may form a multi-controller AA cluster, and the controller 121, the controller 122, the controller 411, and the controller 412 are all active controllers. The path 1, the path 2, the path 3, and the path 4 for the host to access the LUN are all active paths. However, because the controller 411 alternately allocates the address space of the LUN to the controller 411 and the controller 412 in the control device 410, but does not allocate the address space of the LUN to the controller 121 and the controller 122, the host service is switched from the controller 121 and the controller 122 to the controller 411 and the controller 412.

For example, if the controller 121 receives the IO request delivered by the host, the controller 121 may determine, based on the logical address carried in the IO request and an accessible address space that is of the LUN and that is allocated to the controller 411 and the controller 412, whether the controller that processes the IO request is the controller 411 or the controller 412 in the AA cluster. If it is determined that the controller that processes the IO request is the controller 411, the controller 121 that receives the IO request may forward the IO request to the controller 411 for processing.

Optionally, in some embodiments, when delivering the IO request, the host may determine, based on the logical address of the IO request and the accessible address space that is of the LUN and that is allocated to the controller 411 and the controller 412, whether the path for accessing the LUN is the path 3 or the path 4. If the host determines that the path for accessing the LUN is the path 3, the host may send the IO request to the controller 411 by using the path 3 for processing.

In the foregoing technical solution, the host directly determines, based on the logical address of the IO request and the accessible address space that is of the LUN and that that is allocated to the controller 411 and the controller 412, the path for accessing the LUN. Therefore, the controllers in the AA cluster can be prevented from forwarding the IO request delivered by the host to each other, to reduce signaling overheads.

Step 970: The control device 410 obtains the data of the LUN in the control device 120.

A method for obtaining the data of the LUN in the control device 120 by the control device 410 is the same as the step 760 in FIG. 7. Specifically, refer to related descriptions of the step 760 in FIG. 7, and details are not described herein again.

In a process processing the IO request by the controller 411 and the controller 412, if data to be accessed based on the IO request is still in the memory of the control device 120, the controller 411 or the controller 412 suspends the IO request, and continues to execute the IO request after the data is migrated from the memory of the control device 120 to the memory of the control device 410.

Step 980: After the control device 410 obtains all data of the LUN from the control device 120, the control device 410 notifies the control device 120 to set a host path to be faulty.

The cluster primary controller in the control device 410 may notify the control device 120 to set a path (for example, the path 1 and the path 2 in FIG. 8) for the host to access the LUN by using the controller 121 and the controller 122 to be faulty. For a specific process of performing fault setting in the control device 120, refer to the descriptions in the step 760. Details are not described herein again.

Step 990: The controllers in the control device 410 implement a value-added service.

The step 990 is corresponding to the step 790. Specifically, refer to the descriptions in the step 790, and details are not described herein again.

In this embodiment of this application, in a switching process, performance of a storage system is not lowered, and a controller in a control device does not need to be replaced. Therefore, even if a structure of a new controller changes, the new controller can be used in the storage system.

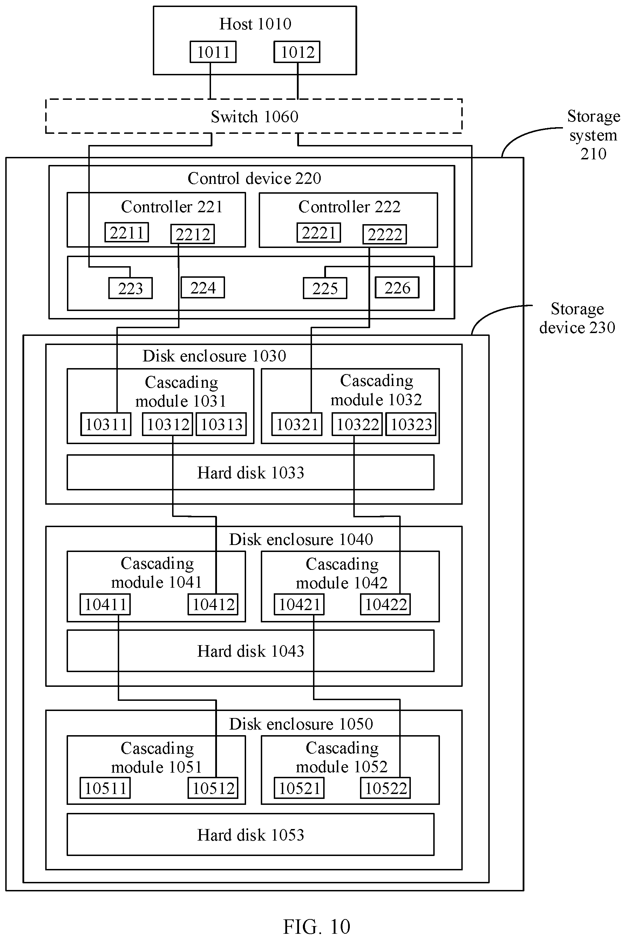

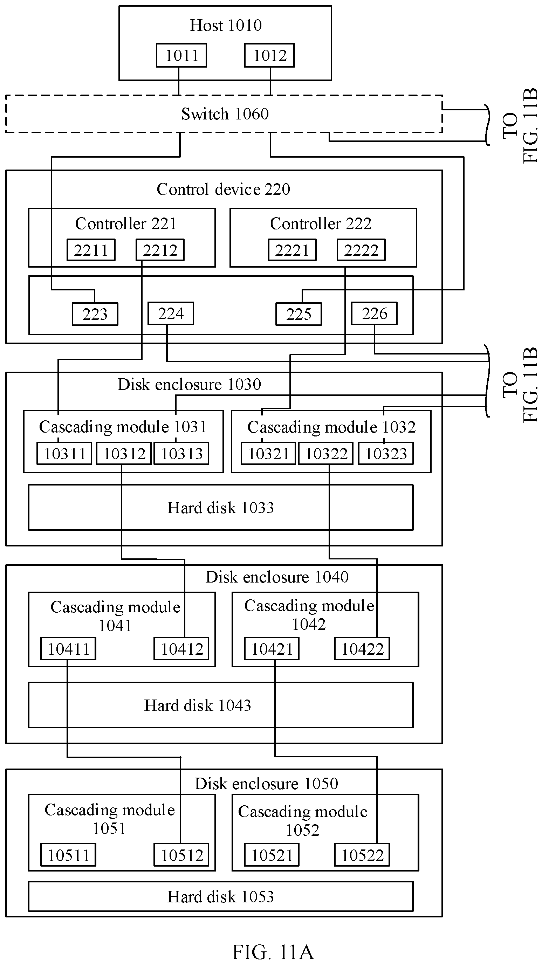

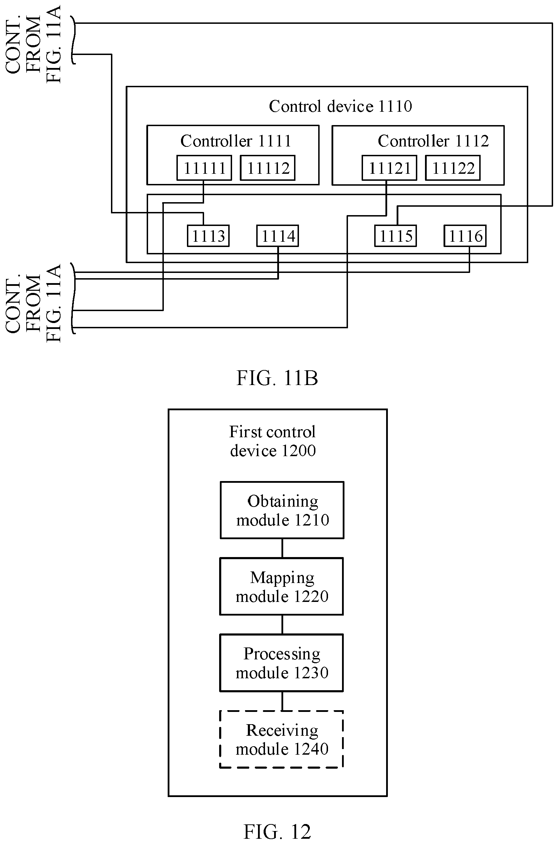

The foregoing describes in detail, by using the storage system 110 with disk and controller integration, shown in FIG. 1, as an example, the control device switching method provided in this embodiment of this application under the AP and AA storage architectures. The following describes in detail a control device switching process with reference to FIG. 10, FIG. 11A, and FIG. 11B in the storage system 210, as shown in FIG. 2, in which the control device and the storage device are separated.

FIG. 10 is a schematic diagram of a connection between the storage system 210 shown in FIG. 2 and a host 1010 and a connection relationship between the control device 220 and the storage device 230. As shown in FIG. 10, in this embodiment of the present invention, the storage device 230 includes a disk enclosure 1030, a disk enclosure 1040, and a disk enclosure 1050 that are cascaded to the control device 220.

The host 1010 may include a service port 1011 and a service port 1012.

The control device 220 may include the controller 221, the controller 222, a front-end interface 223, a front-end interface 224, a front-end interface 225, and a front-end interface 226. The controller 221 includes a cascade interface 2211 and a cascade interface 2212. The controller 222 includes a cascade interface 2221 and a cascade interface 2222.

The disk enclosure 1030 may include a cascading module 1031, a cascading module 1032, and a hard disk 1033. The cascading module 1031 may include a cascade interface 10311, a cascade interface 10312, and a cascade interface 10313. The cascading module 1032 may include a cascade interface 10321, a cascade interface 10322, and a cascade interface 10323.

Structures of the disk enclosure 1040 and the disk enclosure 1050 are the same as a structure of the disk enclosure 1030. Specifically, refer to descriptions of the disk enclosure 1030, and details are not described herein again.

In this embodiment of this application, the front-end interface in the control device 220 may be connected to the service port of the host 1010. For example, in FIG. 10, the front-end interface 223 is connected to the service port 1011 in the host 1010, and the front-end interface 225 is connected to the service port 1012 in the host 1010.

There are a plurality of connection modes between the controller and the host. This is not specifically limited in this application. In an example, a front-end interface in a controller may be directly connected to a service port in the host 1010. For example, the front-end interface 223 is directly connected to the service port 1011 in the host 1010, and the front-end interface 225 is directly connected to the service port 1012 in the host 1010. In another example, a front-end interface may be connected to a service port in the host 1010 by using a switch 1060. For example, the front-end interface 223 may be connected to the service port 1011 in the host 1010 by using the switch 1060, and the front-end interface 225 may be connected to the service port 1012 in the host 1010 by using the switch 1060.

In this embodiment of this application, the control device 220 may access, through a cascade interface, data stored in a hard disk in a disk enclosure. For example, the cascade interface 2212 in the controller 221 is connected to the cascade interface 10311 in the cascading module 1031 in the disk enclosure 1030, and the cascade interface 10312 in the cascading module 1031 is connected to a cascade interface 10412 in a cascading module 1041 in the disk enclosure 1040, a cascade interface 10411 in the cascading module 1041 is connected to a cascade interface 10512 in a cascading module 1051 in the disk enclosure 1050. When another disk enclosure needs to be cascaded, the another disk enclosure is cascaded through a cascade interface 10511 in the disk enclosure 1050. In the foregoing cascading manner, the controller 221 may access data stored in the hard disk 1033, a hard disk 1043, and a hard disk 1053. Similarly, the controller 222 may also be connected to the cascade interface 10321 in the cascading module 1032 in the disk enclosure 1030 through the cascade interface 2222, and the cascade interface 10322 in the cascading module 1032 is connected to a cascade interface 10422 in a cascading module 1042 in the disk enclosure 1040, a cascade interface 10421 in the cascading module 1042 is connected to a cascade interface 10522 in a cascading module 1052 in the disk enclosure 1050. Therefore, the controller 222 may also access the data stored in the hard disk 1033, the hard disk 1043, and the hard disk 1053.

According to the control device switching method provided in this embodiment of this application, a new control device may be connected to a storage system in service, and a control device in the storage system is switched from an old control device to the new control device. After a new control device 1110 is connected to the storage system 210, for a connection between the new control device 1110 and the storage system 210, refer to descriptions in FIG. 11A and FIG. 11B.

The control device 1110 may include a controller 1111, a controller 1112, a front-end interface 1113, a front-end interface 1114, a front-end interface 1115, and a front-end interface 1116. The controller 1111 includes a cascade interface 11111 and a cascade interface 11112. The controller 1112 includes a cascade interface 11121 and a cascade interface 11122.

In this embodiment of this application, the control device 1110 may be connected to the host 1010, to form an IO access path. The control device 1110 may be further connected to the storage system 230 (namely, the hard disk 1033, the hard disk 1043, and the hard disk 1053). Therefore, the control device 1110 can access data stored in the storage device 230.

For example, the control device 1110 is connected to the host 1010. Refer to FIG. 11A and FIG. 11B. The front-end interface 1113 is connected to the service port 1011 in the host 1010, and the front-end interface 1115 is connected to the service port 1012 in the host 1010.

There are a plurality of connection modes between the controller and the host. The front-end interface in the control device 1110 may be directly connected to the service port in the host 1010, or may be connected to the service port in the host 1010 by using the switch 1060. Specifically, refer to the descriptions in FIG. 10, and details are not described herein again.

For example, the control device 1110 is connected to the storage device 230 (namely, the hard disk 1033, the hard disk 1043, and the hard disk 1053). Refer to FIG. 11A and FIG. 11B. Te cascade interface 11111 in the controller 1111 is connected to the cascade interface 10313 in the cascading module 1031 in the disk enclosure 1030, and the cascade interface 11121 in the controller 1112 is connected to the cascade interface 10323 in the cascading module 1032 in the disk enclosure 1030.

In this embodiment of this application, the control device 1110 and the front-end interface of the control device 220 are also connected to each other, to implement communication between the control device 1110 and the control device 220. For example, referring to FIG. 11A and FIG. 11B, the front-end interface 224 in the control device 220 is connected to the front-end interface 1114 in the control device 1110. The front-end interface 226 in the control device 220 is connected to the front-end interface 1116 in the control device 1110.

In this embodiment of this application, in FIG. 11A and FIG. 11B, the control device 1110 may be connected to the storage system 210 in service, and the control device in the storage system 210 is switched from the old control device 220 to the new control device 1110. Specifically, for a process of switching a host service in the old control device 220 to the new control device 1110, refer to descriptions in FIG. 6 to FIG. 9, and details are not described herein again.

With reference to FIG. 1 to FIG. 11A and FIG. 11B, the foregoing describes in detail the control device switching method provided in this embodiment of this application. The following describes in detail apparatus embodiments of this application. It should be understood that the descriptions of the method embodiments are corresponding to descriptions of the apparatus embodiments. Therefore, for parts that are not described in detail, refer to the method embodiments above.

FIG. 12 is a schematic diagram of a structure of a first control device 1200 according to an embodiment of this application. The first control device 1200 includes:
an obtaining module 1210, configured to obtain configuration information of a logical unit number LUN in a second control device, where the LUN is created in a storage device;
a mapping module 1220, configured to map a first path to a host based on the configuration information of the LUN, where the first path is a path for the host to access the LUN by using the first control device, and the first path passes through the second control device; and
a processing module 1230, configured to notify the second control device to set a second path to be faulty, and switch a path for the host to access the LUN from the second path to the first path, where the second path is a path for the host to access the LUN by using the second control device.

In this embodiment of this application, the first control device is connected to the second control device, and accesses, by using the second control device, a storage device that can be accessed by the second control device, and the first control device and the second control device are separately connected to the host.

Optionally, in some embodiments, the first control device 1200 further includes a receiving module 1240.

The obtaining module 1210 is further configured to, after the first path is mapped to the host, obtain data of the LUN in the second control device.

The receiving module 1240 is configured to receive an input/output IO request for accessing the data of the LUN, and access the data of the LUN by using the first control device.

Optionally, in some embodiments, the obtaining module 1210 is specifically configured to: notify the second control device to store data in a memory of the second control device in the storage device; and obtain the data of the LUN from the storage device.

Optionally, in some embodiments, the obtaining module 1210 is specifically configured to notify the second control device to migrate the data of the LUN in the memory of the second storage device to a memory of the first control device.

Optionally, in some embodiments, the processing module 1230 is specifically configured to: after the second control device is notified to set the second path to be faulty, switch the path for the host to access the LUN from the second path to the first path.

Optionally, in some embodiments, the first path includes at least one path, and the processing module 1230 is specifically configured to set one path in the first path as a primary path, where the host accesses the LUN by using the primary path.

Optionally, in some embodiments, the receiving module 1240 is further configured to: in a process of obtaining the data of the LUN in the second control device, receive a mirror write request sent by the second controller, where the mirror write request is generated by the second controller when the second controller receives a write request, and the mirror write request is used to mirror-write data in the IO request into the memory of the first control device.

Optionally, in some embodiments, the processing module 1230 is specifically configured to: after the path for the host to access the LUN is switched from the second path to the first path, notify the second control device to set the second path to be faulty.

Optionally, in some embodiments, the processing module 1230 is further configured to: set one controller in the first control device as a cluster primary controller; and allocate, by using the cluster primary controller, an address space allocated to a controller of the second control device to the controller of the first control device.

The first control device 1200 according to this embodiment of the present invention may correspondingly perform the method described in the embodiments of the present invention. In addition, the foregoing and other operations and/or functions of the units in the first control device 1200 are separately used to implement a corresponding procedure of the method in FIG. 7. For brevity, details are not described herein again.

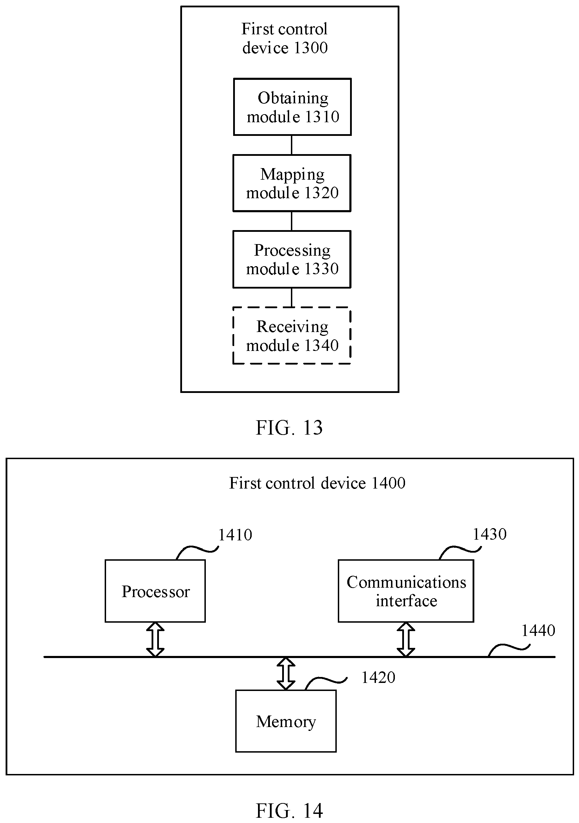

FIG. 13 is a schematic diagram of a structure of a first control device 1300 according to an embodiment of this application. The first control device 1300 includes:
an obtaining module 1310, configured to obtain configuration information of a logical unit number LUN in a second control device, where the LUN is created in a storage device;
a mapping module 1320, configured to map a first path to the host based on the configuration information of the LUN, where the first path is a path for the host to access the LUN through a cascade interface through which the first control device is connected to the storage device; and
a processing module 1330, configured to notify the second control device to set a second path to be faulty, and switch a path for the host to access the LUN from the second path to the first path, where the second path is a path for the host to access the LUN by using the second control device.

In this embodiment of this application, the first control device is connected to the second control device, and the first control device and the second control device are separately connected to the storage device through two uplink cascade interfaces of the storage device, and are separately connected to the host.

Optionally, in some embodiments, the first control device 1300 further includes a receiving module 1340.

The obtaining module 1310 is further configured to, after the first path is mapped to the host, obtain data of the LUN in the second control device.

The receiving module 1340 is configured to receive an IO request for accessing the data of the LUN, and access the data of the LUN by using the first control device.

Optionally, in some embodiments, the obtaining module 1310 is specifically configured to: notify the second control device to store data in a memory of the second control device in the storage device; and obtain the data of the LUN from the storage device.

Optionally, in some embodiments, the obtaining module 1310 is specifically configured to notify the second control device to migrate the data of the LUN in the memory of the second storage device to a memory of the first control device.

Optionally, in some embodiments, the first path includes at least one path, and the processing module 1330 is specifically configured to set one path in the first path as a primary path, where the host accesses the LUN by using the primary path.

Optionally, in some embodiments, the receiving module 1340 is further configured to: in a process of obtaining the data of the LUN in the second control device, receive a mirror write request sent by the second controller, where the mirror write request is generated by the second controller when the second controller receives the IO request, and the mirror write request is used to mirror-write data in the IO request into the memory of the first control device.

The first control device 1300 according to this embodiment of the present invention may correspondingly perform the method described in the embodiments of the present invention. In addition, the foregoing and other operations and/or functions of the units in the first control device 1300 are separately used to implement a corresponding procedure of the method in FIG. 9. For brevity, details are not described herein again.

FIG. 14 is a schematic diagram of a structure of a first control device 1400 according to an embodiment of this application. The first control device 1400 includes a processor 1410, a memory 1420, a communications interface 1430, and a bus 1440.

It should be understood that the processor 1410 in the first control device 1400 shown in FIG. 14 may be corresponding to the mapping module 1220 and the processing module 1230 in the first control device 1200 in FIG. 12. The communications interface 1430 in the first control device 1400 may be corresponding to the obtaining module 1210 in the first control device 1200.

The processor 1410 may be connected to the memory 1420. The memory 1420 may be configured to store program code and data. Therefore, the memory 1420 may be a storage unit in the processor 1410, an external storage unit independent of the processor 1410, or a component including the storage unit in the processor 1410 and the external storage unit independent of the processor 1410.

Optionally, the first control device 1400 may further include the bus 1440. The memory 1420 and the communications interface 1430 may be connected to the processor 1410 by using the bus 1440. The bus 1440 may be a peripheral component interconnect (peripheral component interconnect, PCI) bus, an extended industry standard architecture (extended industry standard architecture, EISA) bus, or the like. The bus 1440 may be classified into an address bus, a data bus, a control bus, and the like. For ease of representation, only one line is used to represent the bus in FIG. 14, but this does not mean that there is only one bus or only one type of bus.

It should be understood that in this embodiment of this application, the processor 1410 may be a central processing unit (central processing unit, CPU). The processor may be another general-purpose processor, a digital signal processor (digital signal processor, DSP), an application-specific integrated circuit (application specific integrated circuit, ASIC), a field programmable gate array (field programmable gate Array, FPGA) or another programmable logic device, a discrete gate or transistor logic device, a discrete hardware component, or the like. The general-purpose processor may be a microprocessor, any conventional processor, or the like. Alternatively, the processor 1410 uses one or more integrated circuits to execute a related program, to implement the technical solutions provided in the embodiments of this application.

The memory 1420 may include a read-only memory and a random access memory, and provide an instruction and data to the processor 1410. A part of the processor 1410 may further include a non-volatile random access memory. For example, the processor 1410 may further store information of a device type.

When the first control device 1400 runs, the processor 1410 executes a computer-executable instruction in the memory 1420, to perform the operation steps of the foregoing method by using the first control device 1400.

It should be understood that the first control device 1400 according to this embodiment of the present invention may be corresponding to the first control device 1200 in the embodiments of the present invention. In addition, the foregoing and other operations and/or functions of the units in the first control device 1400 are separately used to implement a corresponding procedure of the method in FIG. 7. For brevity, details are not described herein again.

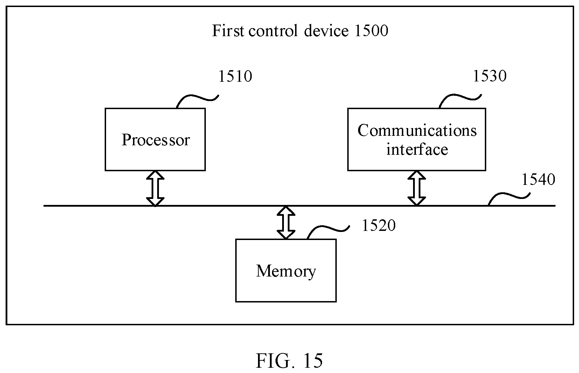

FIG. 15 is a schematic diagram of a structure of a first control device 1500 according to an embodiment of this application. The first control device 1500 includes a processor 1510, a memory 1520, a communications interface 1530, and a bus 1540.

It should be understood that the processor 1510 in the first control device 1500 shown in FIG. 15 may be corresponding to the mapping module 1320 and the processing module 1330 in the first control device 1300 in FIG. 13. The communications interface 1530 in the first control device 1500 may be corresponding to the obtaining module 1310 in the first control device 1300.

The processor 1510 may be connected to the memory 1520. The memory 1520 may be configured to store program code and data. Therefore, the memory 1520 may be a storage unit in the processor 1510, an external storage unit independent of the processor 1510, or a component including the storage unit in the processor 1510 and the external storage unit independent of the processor 1510.

Optionally, the first control device 1500 may further include the bus 1540. The memory 1520 and the communications interface 1530 may be connected to the processor 1510 by using the bus 1540. The bus 1540 may be a peripheral component interconnect (peripheral component interconnect, PCI) bus, an extended industry standard architecture (extended industry standard architecture, EISA) bus, or the like. The bus 1540 may be classified into an address bus, a data bus, a control bus, and the like. For ease of representation, only one line is used to represent the bus in FIG. 15, but this does not mean that there is only one bus or only one type of bus.

It should be understood that in this embodiment of this application, the processor 1510 may be a central processing unit (central processing unit, CPU). The processor may be another general-purpose processor, a digital signal processor (digital signal processor, DSP), an application-specific integrated circuit (application specific integrated circuit, ASIC), a field programmable gate array (field programmable gate Array, FPGA) or another programmable logic device, a discrete gate or transistor logic device, a discrete hardware component, or the like. The general-purpose processor may be a microprocessor, any conventional processor, or the like. Alternatively, the processor 1510 uses one or more integrated circuits to execute a related program, to implement the technical solutions provided in the embodiments of this application.

The memory 1520 may include a read-only memory and a random access memory, and provide an instruction and data to the processor 1510. A part of the processor 1510 may further include a non-volatile random access memory. For example, the processor 1510 may further store information of a device type.

When the first control device 1500 runs, the processor 1510 executes a computer-executable instruction in the memory 1520, to perform the operation steps of the foregoing method by using the first control device 1500.

It should be understood that the first control device 1500 according to this embodiment of the present invention may be corresponding to the first control device 1300 in the embodiments of the present invention. In addition, the foregoing and other operations and/or functions of the units in the first control device 1500 are separately used to implement a corresponding procedure of the method in FIG. 9. For brevity, details are not described herein again.

Optionally, in some embodiments, an embodiment of this application further provides a computer-readable medium. The computer-readable medium stores program code. When the computer program code is run on a computer, the computer is enabled to perform the methods in the foregoing aspects.

Optionally, in some embodiments, an embodiment of this application further provides a computer program product. The computer program product includes computer program code. When the computer program code is run on a computer, the computer is enabled to perform the methods in the foregoing aspects.

All or some of the foregoing embodiments may be implemented by means of software, hardware, firmware, or any combination thereof. When software is used to implement the embodiments, all or some of the foregoing embodiments may be implemented in a form of a computer program product. The computer program product includes one or more computer instructions. When the computer program instructions are loaded or executed on the computer, the procedure or functions according to the embodiments of the present invention are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid state drive, SSD).

It should be understood that sequence numbers of the foregoing processes do not mean execution sequences in the embodiments of this application. The execution sequences of the processes should be determined based on functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed systems, apparatuses, and methods may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communications connections may be implemented by using some interfaces. The indirect couplings or communications connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in the form of a software product. The computer application product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control device switching method, wherein the method is applied to a first control device, the first control device is connected to a second control device, and accesses, by using the second control device, a storage device that can be accessed by the second control device, the first control device and the second control device are separately connected to a host, and the method comprises:
obtaining configuration information of a logical unit number LUN in the second control device, wherein the LUN is created in the storage device;
mapping a first path to the host based on the configuration information of the LUN, wherein the first path is a path for the host to access the LUN by using the first control device, and the first path passes through the second control device; and
notifying the second control device to set a second path to be faulty, and switching a path for the host to access the LUN from the second path to the first path, wherein the second path is a path for the host to access the LUN by using the second control device.

2. The method according to claim 1, wherein the method further comprises:
after mapping the first path to the host, obtaining data of the LUN in the second control device; and
receiving an input/output IO request for accessing the data of the LUN, and accessing the data of the LUN by using the first control device.

3. The method according to claim 2, wherein the obtaining data of the LUN in the second control device comprises:
notifying the second control device to store data in a memory of the second control device to the storage device; and
obtaining the data of the LUN from the storage device.

4. The method according to claim 2, wherein the obtaining data of the LUN in the second control device comprises:
notifying the second control device to migrate the data of the LUN in the memory of the second storage device to a memory of the first control device.

5. The method according to any one of claims 1 to 4, wherein the notifying the second control device to set a second path to be faulty, and switching a path for the host to access the LUN from the second path to the first path comprises:
after notifying the second control device to set the second path to be faulty, switching the path for the host to access the LUN from the second path to the first path.

6. The method according to claim 5, wherein the first path comprises at least one path, and the switching the path for the host to access the LUN from the second path to the first path comprises:
setting one path in the first path as a primary path, wherein the host accesses the LUN by using the primary path.

7. The method according to claim 5 or 6, wherein the method further comprises:
in a process of performing the obtaining data of the LUN in the second control device, receiving a mirror write request sent by the second controller, wherein the mirror write request is generated by the second controller when the second controller receives a write request, and the mirror write request is used to mirror-write data in the IO request into the memory of the first control device.

8. The method according to any one of claims 1 to 4, wherein the notifying the second control device to set a second path to be faulty, and switching a path for the host to access the LUN from the second path to the first path comprises:
after switching the path for the host to access the LUN from the second path to the first path, notifying the second control device to set the second path to be faulty.

9. The method according to claim 8, wherein the switching the path for the host to access the LUN from the second path to the first path comprises:
setting one controller in the first control device as a cluster primary controller; and
allocating, by the cluster primary controller, an address space allocated to a controller of the second control device to a controller of the first control device.

10. A control device switching method, wherein the method is applied to a first control device, the first control device is connected to a second control device, the first control device and the second control device are separately connected to a storage device through two uplink cascade interfaces of the storage device, and are separately connected to a host, and the method comprises:
obtaining configuration information of a logical unit number LUN in the second control device, wherein the LUN is created in the storage device;
mapping a first path to the host based on the configuration information of the LUN, wherein the first path is a path for the host to access the LUN through a cascade interface through which the first control device is connected to the storage device; and
notifying the second control device to set a second path to be faulty, and switching a path for the host to access the LUN from the second path to the first path, wherein the second path is a path for the host to access the LUN by using the second control device.

11. The method according to claim 10, wherein the method further comprises:
after mapping the first path to the host, obtaining data of the LUN in the second control device; and
receiving an IO request for accessing the data of the LUN, and accessing the data of the LUN by using the first control device.

12. The method according to claim 11, wherein the obtaining data of the LUN in the second control device comprises:
notifying the second control device to store data in a memory of the second control device in the storage device; and
obtaining the data of the LUN from the storage device.

13. The method according to claim 11, wherein the obtaining data of the LUN in the second control device comprises:
notifying the second control device to migrate the data of the LUN in the memory of the second storage device to a memory of the first control device.

14. The method according to any one of claims 10 to 13, wherein the first path comprises at least one path, and the switching a path for the host to access the LUN from the second path to the first path comprises:
setting one path in the first path as a primary path, wherein the host accesses the LUN by using the primary path.

15. The method according to claim 13 or 14, wherein the method further comprises:
in a process of performing the obtaining data of the LUN in the second control device, receiving a mirror write request sent by the second controller, wherein the mirror write request is generated by the second controller when the second controller receives the IO request, and the mirror write request is used to mirror-write data in the IO request into the memory of the first control device.

16. A first control device, wherein the first control device is connected to a second control device, and accesses, by using the second control device, a storage device that can be accessed by the second control device, the first control device and the second control device are separately connected to a host, and the first control device comprises:
an obtaining module, configured to obtain configuration information of a logical unit number LUN in the second control device, wherein the LUN is created in storage device;
a mapping module, configured to map a first path to the host based on the configuration information of the LUN, wherein the first path is a path for the host to access the LUN by using the first control device, and the first path passes through the second control device; and
a processing module, configured to notify the second control device to set a second path to be faulty, and switch a path for the host to access the LUN from the second path to the first path, wherein the second path is a path for the host to access the LUN by using the second control device.

17. The first control device according to claim 16, wherein the first control device further comprises a receiving module;
the obtaining module is further configured to, after the first path is mapped to the host, obtain data of the LUN in the second control device; and
the receiving module is configured to receive an input/output IO request for accessing the data of the LUN, and access the data of the LUN by using the first control device.

18. The first control device according to claim 17, wherein the obtaining module is specifically configured to:
notify the second control device to store data in a memory of the second control device in the storage device; and
obtain the data of the LUN from the storage device.

19. The first control device according to claim 17, wherein the obtaining module is specifically configured to:
notify the second control device to migrate the data of the LUN in the memory of the second storage device to a memory of the first control device.

20. The first control device according to any one of claims 16 to 19, wherein the processing module is specifically configured to:
after the second control device is notified to set the second path to be faulty, switch the path for the host to access the LUN from the second path to the first path.

21. The first control device according to claim 20, wherein the first path comprises at least one path, and the processing module is specifically configured to:
set one path in the first path as a primary path, wherein the host accesses the LUN by using the primary path.

22. The first control device according to claim 20 or 21, wherein the receiving module is further configured to:
in a process of obtaining the data of the LUN in the second control device, receive a mirror write request sent by the second controller, wherein the mirror write request is generated by the second controller when the second controller receives a write request, and the mirror write request is used to mirror-write data in the IO request into the memory of the first control device.

23. The first control device according to any one of claims 16 to 19, wherein the processing module is specifically configured to:
after the path for the host to access the LUN is switched from the second path to the first path, notify the second control device to set the second path to be faulty.

24. The first control device according to claim 23, wherein the processing module is further specifically configured to:
set one controller in the first control device as a cluster primary controller; and
allocate, by using the cluster primary controller, an address space allocated to a controller of the second control device to a controller of the first control device.

25. A first control device, wherein the first control device is connected to a second control device, the first control device and the second control device are separately connected to a storage device through two uplink cascade interfaces of the storage device, and are separately connected to a host, and the first control device comprises:
an obtaining module, configured to obtain configuration information of a logical unit number LUN in the second control device, wherein the LUN is created in storage device;
a mapping module, configured to map a first path to the host based on the configuration information of the LUN, wherein the first path is a path for the host to access the LUN through a cascade interface through which the first control device is connected to the storage device; and
a processing module, configured to notify the second control device to set a second path to be faulty, and switch a path for the host to access the LUN from the second path to the first path, wherein the second path is a path for the host to access the LUN by using the second control device.

26. The first control device according to claim 25, wherein the first control device further comprises a receiving module;
the obtaining module is further configured to, after the first path is mapped to the host, obtain data of the LUN in the second control device; and
the receiving module is configured to receive an IO request for accessing the data of the LUN, and access the data of the LUN by using the first control device.

27. The first control device according to claim 26, wherein the obtaining module is specifically configured to:
notify the second control device to store data in a memory of the second control device in the storage device; and
obtain the data of the LUN from the storage device.

28. The first control device according to claim 26, wherein the obtaining module is specifically configured to:
notify the second control device to migrate the data of the LUN in the memory of the second storage device to a memory of the first control device.

29. The first control device according to any one of claims 25 to 28, wherein the first path comprises at least one path, and the processing module is specifically configured to:
set one path in the first path as a primary path, wherein the host accesses the LUN by using the primary path.

30. The first control device according to claim 28 or 29, wherein the receiving module is further configured to:
in a process of performing the obtaining data of the LUN in the second control device, receive a mirror write request sent by the second controller, wherein the mirror write request is generated by the second controller when the second controller receives the IO request, and the mirror write request is used to mirror-write data in the IO request into the memory of the first control device.

31. A storage system, wherein the storage system comprises a first control device and a second control device, the second control device is connected to a storage device, the first control device is connected to an interface of the second control device, the first storage device accesses the storage device through the interface, and the first control device and the second control device are separately connected to a host.

32. A storage system, wherein the storage system comprises a first control device and a second control device, the first control device is connected to the second control device, and the first control device and the second control device are separately connected to a storage device through two uplink cascade interfaces of the storage device, and are separately connected to a host.
